# EUROPEAN PATENT APPLICATION

(11) **EP 2 056 530 A1**
(43) Date of publication of application: **06.05.2009**
(21) Application number: 07801051.9
(22) Date of filing: 06.09.2007
(51) Int. Cl.: H04L 12/28

(54) **SAVING ELECTRICITY INFORMATION HOME ELECTRIC NETWORK AND SAVING ELECTRICITY CONTROLLING METHOD**

(30) Priority: 06.09.2006 CN 200610126934
(71) Applicant: China Mobile Communications Corporation, Beijing 100032 (CN)
(72) Inventor: OUYANG, Congxing, Beijing 100032 (CN); LIU, Jinglei, Beijing 100032 (CN); ZHOU, Jianming, Beijing 100032 (CN); ZHANG, Guanghai, Beijing 100032 (CN)
(74) Representative: Palmer, Jonathan R.
(86) International application number: PCT/CN2007/070643
(87) International publication number: WO 2008/040206

(57) **Abstract**

A saving electricity information home electric network and a saving electricity controlling method are disclosed. The saving electricity information home electric network includes home network host and the intelligent information home electric device; there is a signal interface module in the home network host, and there is a signal processing module communicating with the signal interface module in the intelligent information home electric device, and the signal processing module includes the high frequency signal processing unit and the low frequency signal processing unit; the signal processing module connects with the information processing send-receiving unit. The saving electricity controlling method include: after the low frequency signal processing unit receives the low frequency triggering signal, sends the work triggering signal to the high frequency signal processing unit; the intelligent information home electric device feedbacks the information of switching to the cold waiting state, and the intelligent information home electric device switches from a heat waiting state to a cold waiting state after completing the information processing. The invention can greatly reduce the electricity consumption of the information home electric network, reduce the probability of damaging the important parts, eliminate the safety hidden danger of possibly arising fire and have the preferable practical application value.

## Description

### Field of the Invention

The present invention relates to an energy saving information appliance network and an energy saving control method, and in particular to an energy saving information appliance network in which energy saving is achieved by providing a signal processing module in an information appliance to enable the information appliance to stay in a hot standby state and to operate when required, thus reducing energy consumption, and a method for conducting energy saving control in using the energy saving information appliance network.

### Background of the Invention

With the development of network technology and information appliance industry, original household appliances can now exchange data with a network. This type of household appliances that can exchange information with a network is called information appliances or networking appliances. An information appliance can receive data from a network, and feed its status information to the network. The appearance of information appliances enables a user to obtain data of an information appliance located at home via the Internet, so that the user can know the status of the information appliance without being at home. An intelligent information appliance is an information appliance that has more functions with relatively complex information exchange and data processing such as a television, a microwave, a refrigerator, or a compound device with a hub. Other information appliances than intelligent information appliances are logical information appliances with only simple logical functions such as a signal controlled lamp or an electrically controlled faucet. A logical information appliance only needs to receive simple logical control commands (such as control signals of On and Off) to accomplish corresponding functions and feed status information (such as switch status) to a control device or a network without complex information exchange.

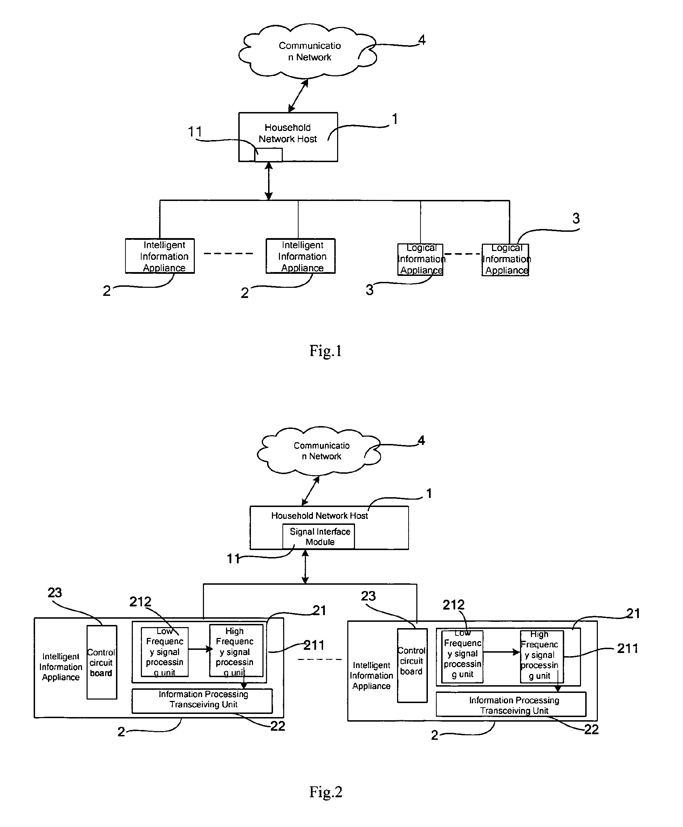

Presently available networking modes for information appliances include a centralized control mode and a distributed control mode. No matter which control mode is used, the composition of a network system is as shown in Figure 1. A network system usually includes a gateway device (also called a household network host) 1, an intelligent information appliance 2, and a logical information appliance 3. The household network host 1 is outwardly connected to an exterior communication network 4 through a corresponding network interface and inwardly connected to a plurality of intelligent information appliances 2 and logical information appliances 3 in a bus mode, a power line communication (PLC) mode through a built-in signal interface module 11, or in a wireless communication mode through a wireless interface, or in composite modes, thereby forming a local area information network inside of the house. Each intelligent information appliance 2 is provided with an information processing and transceiving unit for identifying a control signal and controlling data information exchange. The information processing and transceiving unit can be an Ethernet interception module, a bus transceiving module and/or a wireless signal transceiving module.

In networking, usually a mesh network connection is employed and a household network is divided into a backbone network for high speed data transmission and a sub-network for low speed data transmission. A device in the backbone network and a device in the sub-network usually employ different protocol stacks and transmission modes. The backbone network may employ Ethernet, and the bottom level of the sub-network usually employs other networking modes than Ethernet.

Since operation of the intelligent information appliances 2 and the logical information appliances 3 is implemented based on control commands from the household network host 1, these information appliances are usually in their standby states when not working. For a logical information appliance with simple control logics, no or few data are exchanged, power consumption in its standby state is virtually null. Hence the standby state can be considered as a cold standby state. In a cold standby state, among components in the appliance, only a control unit working on a low frequency signal is working. For an intelligent information appliance with relatively complicated control logics, data exchange with other devices or an exterior network is often necessary, so a hot standby state is employed in which working state can be assumed at any time. In a hot standby state, a control electric circuit (or a control module) of the intelligent information appliance is in an energized state. During operation of an information household network, when a logical information appliance is intended to work, the household network host 1 sends low frequency control information containing address information of the logical information appliance. The logical information appliance receives this low frequency control information and performs corresponding operation. When an intelligent information appliance is intended for data/information processing, the household network host 1 sends high frequency control information also containing address information of the intelligent information appliance because with low frequency control information, complicated data/information processing control is not available. An information processing and transceiving unit provided in the intelligent information appliance receives this high frequency control information and accomplishes data exchange processing for the intelligent information appliance.

Some disadvantages exist for currently available information appliance networks. In practical application, it is quite common that nobody is at home. Since low frequency control information is not able to control operation of an intelligent information appliance, almost all intelligent information appliances that operate on manual operation stay in hot standby states for long without any operation commands, which result in waste of large amount of electrical power. Furthermore, in the hot standby states, heavy voltage or current load is exerted on important components in an intelligent information appliance for long, which may result in damage to those components, or even cause risks of fire.

### Summary of the Invention

An object of the present invention is to overcome the disadvantages with existing information appliance networks of wasting a large amount of energy, easy damage to important components, and risks of fire.

Therefore the present invention provides an energy saving information appliance network and an energy saving control method.

An energy saving information appliance network according to an embodiment of the present invention including a household network host and an intelligent information appliance in which the household network host is provided with a signal interface module for communicating with the intelligent information appliance. The intelligent information appliance is provided with a signal processing module for communicating connection with the signal interface module. The signal processing module includes a high frequency signal processing unit for receiving high frequency signal from the signal interface module and controlling transmission of data information. The signal processing module further includes a low frequency signal processing unit for receiving ON/OFF signals from the signal interface module and activating the high frequency signal processing unit according to an ON signal of the ON/OFF signals to switch the intelligent information appliance from a cold standby state to a hot standby state, or deactivating the high frequency signal processing unit to switch the intelligent information appliance from the hot standby state to the cold standby state according to an OFF signal of the ON/OFF signals. The signal processing module is connected with an information processing and transceiving unit provided in the intelligent information appliance.

An energy saving control method for an energy saving information appliance network according to an embodiment of the present invention including

Process 1, sending, by a low frequency signal processing unit provided in an intelligent information appliance, an operation triggering signal to a high frequency signal processing unit provided in the intelligent information appliance upon receiving a low frequency triggering signal from a signal interface module provided in a household network host during normal operation of the energy saving information appliance network.

Process 2, entering, by the high frequency signal processing unit, an operation state so that the intelligent information appliance is in a hot standby state.

Process 3, accomplishing, by the intelligent information appliance, corresponding information processing according to the operation command from the household network host via an information processing and transceiving unit provided in the intelligent information appliance.

Process 4, feeding, by the intelligent information appliance, information which indicates that a cold standby state is to be assumed.

Process 5, switching, by the intelligent information appliance, from the hot standby state to the cold standby state.

With the technical solution of the energy saving information appliance network described above, all intelligent information appliances are provided with a signal processing module which includes a high frequency signal processing unit and a low frequency signal processing unit with the signal processing module being connected to a signal interface module set in the household network host. Thus, the intelligent information appliances stay in cold standby states in their normal standby states. When an intelligent information appliance is intended for operation, the household network host sends a low frequency trigger signal to the intelligent information appliance, and then the low frequency signal processing unit in the intelligent information appliance enables the intelligent information appliance to switch from its cold standby state to a hot standby state via the high frequency signal processing unit. Upon accomplishing corresponding information processing operations, the intelligent information appliance switches from the hot standby state to the cold standby state.

With the technical solution of the energy saving control method for an energy saving information appliance network described above, an intelligent information appliance is kept in cold standby state with low power consumption when the intelligent information appliance is not in operation by performing processes of the low frequency signal processing unit activating the high frequency signal processing unit and the intelligent information appliance switching standby states after accomplishing information processing operation, etc..

In the present invention, the low frequency signal is only used for transmission of control signals, the high frequency signal controls transmission of information/data only in the hot standby state or the operation mode, thus power consumption of the information appliance network is greatly reduced, damage probability of important components is lowered, and risk of fire is eliminated. The practical application value should be fine.

Now the present invention will be further described in more details with reference to drawings and embodiments.

### Brief Description of the Drawings

Figure 1 is a schematic illustration of a system configuration of an existing information appliance network;

Figure 2 is a schematic illustration of a system configuration of an energy saving information appliance network according to an embodiment of the present invention;

Figure 3 is a schematic illustration of a system configuration of an energy saving information appliance network according to another embodiment of the present invention;

Figure 4 is a schematic illustration of a configuration of a signal processing module in an energy saving information appliance network according to an embodiment of the present invention;

Figure 5 is a flowchart of an energy saving control method according to an embodiment of the present invention;

Figure 6 is a flowchart of an energy saving control method according to another embodiment of the present invention; and

Figure 7 is a flowchart of an energy saving control method according to yet another embodiment of the present invention.

### Detailed Description of the Embodiments

A first embodiment of the energy saving information appliance network:

Figure 2 is a schematic illustration of the system configuration of an energy saving information appliance network according to an embodiment of the present invention. The system includes a household network host 1 and a plurality of intelligent information appliances 2. A signal interface module 11 is provided in the household network host 1 for communicating with the intelligent information appliances 2. A signal processing module 21 is provided in an intelligent information appliance 2. The intelligent information appliance 2 is in communication connection with the signal interface module 11 via the signal processing module 21. The signal processing module 21 includes a high frequency signal processing unit 211 for receiving high frequency signal from the signal interface module 11 and controlling transmission of data and information. The signal processing module 21 also includes a low frequency signal processing unit 212 for receiving ON/OFF signals from the signal interface module 11. An ON signal in the ON/OFF signals is for switching the intelligent information appliance 2 from a cold standby state to a hot standby state, an OFF signal in the ON/OFF signals is for switching the intelligent information appliance 2 from the hot standby state to the cold standby state. The signal processing module 21 is in connection with an information processing and transceiving unit 22 provided in the intelligent information appliance 2.

A second embodiment of the energy saving information appliance network:

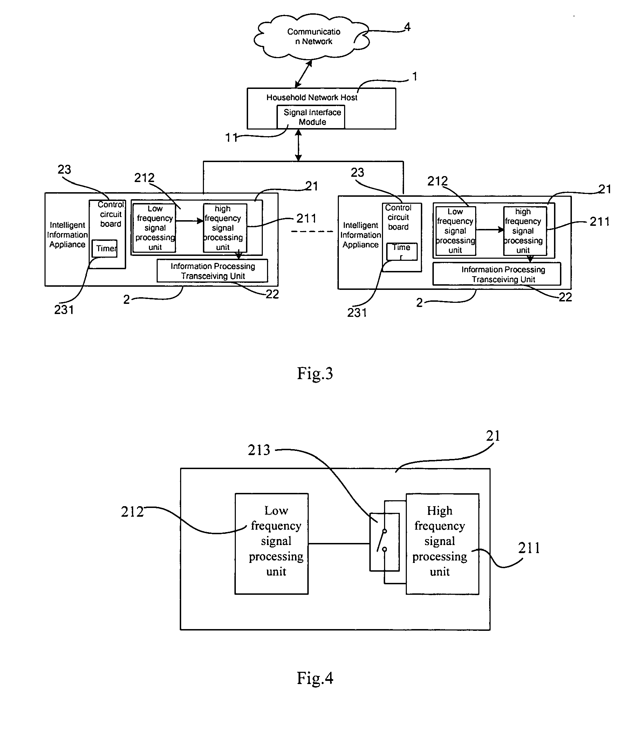

As shown in Figure 3, a timer 231 may be provided on a control circuit board 23 of an intelligent information appliance 2 for sending an OFF signal based on a preset time length before receiving a operation command for performing signal processing so as to trigger the intelligent information appliance to switch from the hot standby state to the cold standby state.

In the above system, the household network host 1 may be outwardly linked to an exterior communication network 4 in either a wireless mode or a wired mode to enable remote control, and inwardly linked to an intelligent information appliance 2 or a logical information appliance in a power line communication (PLC) mode. Using power lines to carry bus signals enables movable applications of the intelligent information appliance 2 and the logical information appliance. Hence it is more convenient to use the PLC mode. In addition, in this embodiment, a wireless link may be provided for flexible communication between appliances. Though simple logical information appliances are included in this embodiment, they are irrelevant to the energy saving problem solved by the present invention, detailed description about them are hence omitted.

The information processing and transceiving unit 22 in an intelligent information appliance 2 is an Ethernet interception module as well as a wireless signal transceiving module. When the bus mode is applied for connection, the information processing and transceiving unit 22 may also include a bus transceiving module.

A low frequency signal is used for transmitting simple control signals such as ON/OFF switching signals and for triggering a high frequency signal processing unit 211 into operation state. When entering the working state, the high frequency signal processing unit 211 simultaneously triggers a control circuit in the intelligent information appliance 2 to switch the control circuit into a state of energized and ready for processing corresponding information, the information processing and transceiving unit 22 is simultaneously activated. Now the intelligent information appliance 2 is in a hot standby state. The high frequency signal processing unit 211 may also exchange data and messages with an exterior communication network 4 through the household network host 1. The high frequency signal is modulated with the Orthogonal Frequency Division Multiplexing (OFDM) modulation scheme for transmitting information which contains large volume of data through a power line such as video information. The signal interface module 11 employs a power line signal conversion module to control and transmit information.

In this embodiment, the commonly existing power line is employed as the signal transmission channel for most of the appliances the control system employs a general protocol for transmitting data over a power line, such as X10, CEBus, Lonworks, ApBus, or employs a specifically defined protocol.

A third embodiment of the energy saving information appliance network

This embodiment is different from the above embodiments only in the detailed structure of the signal processing module 21. The rest of the embodiments are identical and detailed description of that will be omitted. Refer to Figure 4, the high frequency signal processing unit 211 is provided with a switch circuit 213. The control terminal of the switch circuit 213 is connected to a trigger signal output terminal of the low frequency signal processing unit 212 for triggering the high frequency signal processing unit 211 and then triggering switching of standby states of the intelligent information appliance.

A first embodiment of the energy saving control method

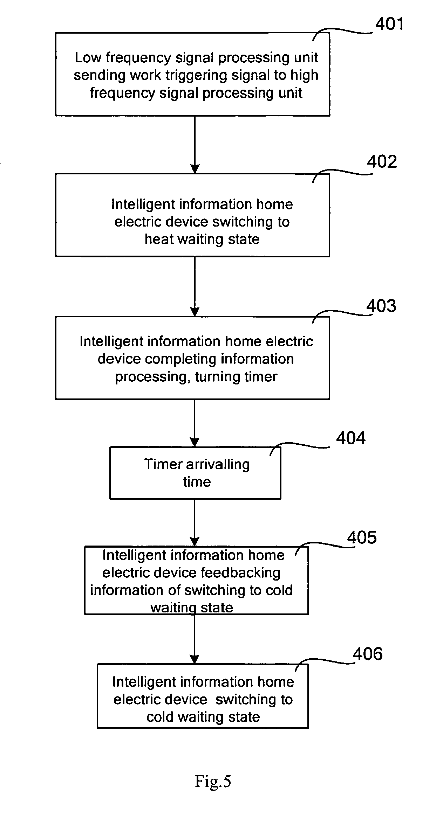

As shown in Figure 5, this embodiment at least includes the following processes.

In process 401, in normal operation of an energy saving information appliance network of the present invention, if an intelligent information appliance is in a cold standby state, upon receiving a low frequency triggering signal sent from a signal interface module provided in a household network host, the low frequency signal processing unit sends an operation triggering signal to a high frequency signal processing unit in the intelligent information appliance.

In process 402, the high frequency signal processing unit triggers the intelligent information appliance via an information processing and transceiving unit in the intelligent information appliance, thereby switch the intelligent information appliance from the cold standby state to a hot standby state. In this state, the intelligent information appliance is able to receive operation commands from a household network host.

In process 403, the intelligent information appliance accomplishes corresponding information processing such as modifying operation contents or parameters, downloading/uploading data information according to an operation command from the household network host. Then a timer is started.

In process 404, if the intelligent information appliance does not receive another operation command before the timer expires, process 405 is executed;

In process 405, the intelligent information appliance feeds back information which indicates that a cold standby state is to be assumed.

In process 406, the intelligent information appliance it switched from the hot standby state to the cold standby state.

In this embodiment, when not in operation, an intelligent information appliance is set to a cold standby state to reduce power consumption and save energy. An intelligent information appliance is switched to a hot standby state only when the intelligent information appliance is required to operate. The time length of the timer can be set by a user or by the manufacturer when manufactured. The longer the time length, the more energy will be wasted. Conversely, the shorter the time length, the more energy will be saved. However, trigger information being frequently from the household network host with a shorter interval may cause frequent switching between standby states, which may affect the lifetime of components of the intelligent information appliance. Hence setting an appropriate time length of the timer may not only protect the intelligent information appliance, but also saves energy.

After accomplishing information processing, receiving no further operation command within a previously set time length, and switching to the cold standby state, an intelligent information appliance feeds the information of its current standby state to the household network host, so that the household network host knows the standby state information of every intelligent information appliance in the information appliance network.

A second embodiment of the energy saving control method:

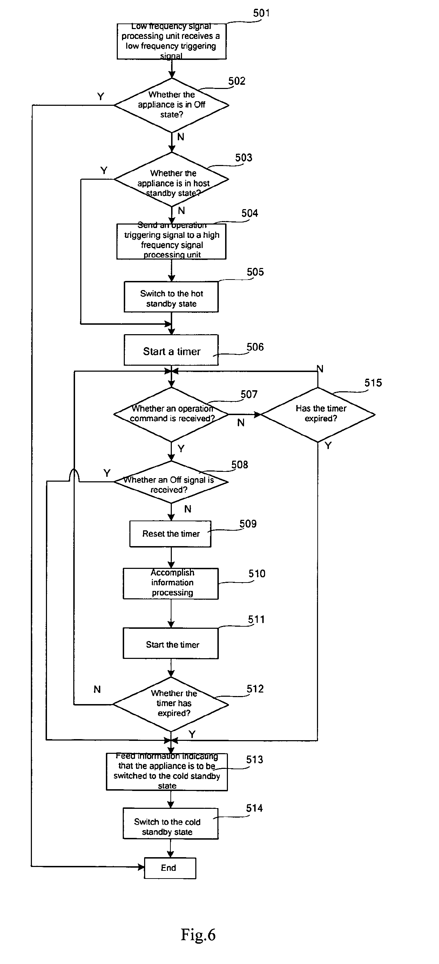

Figure 6 is a flowchart of an energy saving control method according to another embodiment of the present invention. The method includes the following processes.

In process 501, in normal operation of an energy saving information appliance network, a low frequency signal processing unit of an intelligent information appliance receives a low frequency triggering signal from a signal interface module in a household network host.

In process 502, judgment is made on whether or not the intelligent information appliance is in Off state; if yes, the process ends, otherwise execute process 503.

In process 503, judgment is made on whether or not the intelligent information appliance is in a hot standby state; if yes, execute process 506, and otherwise execute process 504.

In process 504, the low frequency signal processing unit sends an operation triggering signal to a high frequency signal processing unit in the intelligent information appliance.

In process 505, the high frequency signal processing unit enters an operation state upon triggered, and triggers a control circuit in the intelligent information appliance into an operation state, so that the intelligent information appliance switches from a cold standby state to the hot standby state.

In process 506, the intelligent information appliance starts a timer, and waits for an operation command.

In process 507, the intelligent information appliance judges whether or not an operation command for performing information processing is received; if yes, execute process 508, otherwise, execute process 515.

In process 508, judgment is made on whether or not an Off signal is received; if yes, execute process 513, otherwise execute process 509.

In process 509, the intelligent information appliance resets the timer.

In process 510, the intelligent information appliance accomplishes corresponding information processing according to the operation command from the household network host.

In process 511, a timer is started again.

In process 512, judgment is made on whether or not the timer has expired; if yes, execute process 513, otherwise return to process 507.

In process 513, the intelligent information appliance feeds information which indicates that the intelligent information appliance is to be switched to the cold standby state.

In process 514, the intelligent information appliance switches from the hot standby state to the cold standby state, and ends the process.

In process 515, judgment is made on whether or not the timer has expired; if yes, execute process 513, otherwise return to process 507.

In this embodiment, the timer is started twice, the reason is as follows. When the intelligent information appliance is in the hot standby state and no operation command is received due to causes such as failure, the intelligent information appliance automatically switches to the cold standby state after waiting for a period to save energy. After receiving an operation command, the intelligent information appliance switches from the hot standby state to the operation state for information processing without standby. The timer must be reset in this case so that the information processing is not interrupted by the timer due to expiring. Only when the information processing is completed and it is unknown whether there will be subsequent operation commands, the intelligent information appliance in the hot standby state will restart the timer, so as to prevent excess consumption of energy.

A third embodiment of the energy saving control method

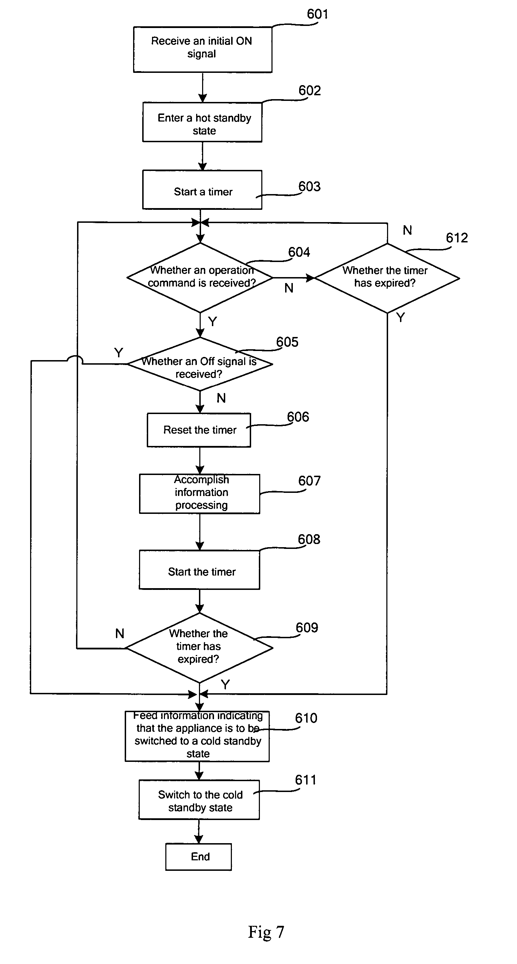

Figure 7 is a flowchart of a third embodiment of an energy saving control method of the present invention. This embodiment is different from the embodiment shown in Figure 6 in that the signal received in Step 601 is an initial ON signal. The method includes the following processes:

In process 601, an intelligent information appliance receives an initial ON signal.

In process 602, the intelligent information appliance enters a hot standby state.

In process 603, the intelligent information appliance starts a timer, waits for an operation command.

In process 604, the intelligent information appliance judges whether or not an operation command for information processing is received; if yes, execute process 605, otherwise execute process 612.

In process 605, a judgment is made on whether or not an OFF signal is received; if yes, execute process 610, otherwise execute process 606.

In process 606, the intelligent information appliance resets the timer.

In process 607, the intelligent information appliance accomplishes corresponding information processing according to the operation command from a household network host.

In process 608, the timer is started again.

In process 609, a judgment is made on whether or not the timer has expired; if yes, then execute process 610, otherwise return to process 604.

In process 610, the intelligent information appliance feeds information which indicates that the intelligent information appliance is to be switched to a cold standby state.

In process 611, the intelligent information appliance switches from the hot standby state to the cold standby state, and the process ended.

In process 612, a judgment is made on whether or not the timer has expired; if yes, execute process 610, otherwise return to process 604.

It should be stated that the above embodiments are only to illustrate but not to limit the technical solutions of the present invention. Though the present invention has been elaborately described in reference to the preferred embodiments, it should be understood by those skilled in the art that modification and equivalent substitution to the technical solutions described above are possible without deviating from the spirit and scope of the technical solutions of the present invention.

## Claims

1. An energy saving information appliance network comprising a household network host and an intelligent information appliance in which the household network host is provided with a signal interface module for communicating with the intelligent information appliance, wherein
the intelligent information appliance is provided with a signal processing module for communicating connection with the signal interface module;
the signal processing module comprises a high frequency signal processing unit for receiving high frequency signal from the signal interface module and controlling transmission of data information; the signal processing module further comprises a low frequency signal processing unit for receiving ON/OFF signals from the signal interface module and activating the high frequency signal processing unit according to an ON signal of the ON/OFF signals to switch the intelligent information appliance from a cold standby state to a hot standby state, or deactivating the high frequency signal processing unit to switch the intelligent information appliance from the hot standby state to the cold standby state according to an OFF signal of the ON/OFF signals; and
the signal processing module is connected with an information processing and transceiving unit provided in the intelligent information appliance.

2. The energy saving information appliance network of claim 1, wherein a control circuit board in the intelligent information appliance is provided with a timer for triggering the intelligent information appliance to switch from the hot standby state to the cold standby state when a period in which the intelligent information appliance does not operate reach a time length set by the timer.

3. The energy saving information appliance network of claim 1 or claim 2, wherein the high frequency signal processing unit is provided with a switch circuit, a control terminal of the switch circuit is connected to a trigger signal output terminal of the low frequency signal processing unit for triggering the intelligent information appliance to switch standby states.

4. The energy saving information appliance network of claim 1 or claim 2, wherein the signal processing and transceiving unit is an Ethernet interception module, a bus transceiving module, or a wireless signal transceiving unit.

5. An energy saving control method for an energy saving information appliance network comprising
process 1, sending, by a low frequency signal processing unit provided in an intelligent information appliance, an operation triggering signal to a high frequency signal processing unit provided in the intelligent information appliance upon receiving a low frequency triggering signal from a signal interface module provided in a household network host during normal operation of the energy saving information appliance network;
process 2, entering, by the high frequency signal processing unit, an operation state so that the intelligent information appliance is in a hot standby state;
process 3, accomplishing, by the intelligent information appliance, corresponding information processing according to the operation command from the household network host via an information processing and transceiving unit provided in the intelligent information appliance ;
process 4, feeding, by the intelligent information appliance, information which indicates that a cold standby state is to be assumed;
process 5, switching, by the intelligent information appliance, from the hot standby state to the cold standby state.

6. The energy saving control method of claim 5, wherein between process 3 and process 4, the method further comprises:
starting, by the intelligent information appliance, a timer; and
executing processes 4 when the timer expires.

7. The energy saving control method of claim 5 or claim 6, wherein in the process 1, upon receiving the low frequency trigger signal, the low frequency signal processing unit judges whether or not the intelligent information appliance is currently in Off state; if yes, then go to end, otherwise send an operation triggering signal to the high frequency signal processing unit provided in the intelligent information appliance.

8. The energy saving control method of claim 5 or claim 6, wherein between process 2 and process 3, the method further comprises:
process 21, starting a timer by the intelligent information appliance;
process 22, making a judgment on whether or not an operation command for performing information processing is received; if yes, execute process 23, otherwise execute process 24;
process 23, resetting, by the intelligent information appliance, the timer, then execute process 3;
process 24, making a judgment on whether or not the timer has expired; if yes, then jump to process 4, otherwise return to process 22.

9. The energy saving control method of claim 8, wherein before process 4, the method further comprises: making a judgment on whether or not the timer has expired, if yes, then jump to process 4, otherwise return to process 22.

10. The energy saving control method of claim 5 or claim 6, wherein in process 1, upon receiving the low frequency trigger signal, the low frequency signal processing unit further judges whether or not the intelligent information appliance is currently in the hot standby state; if yes, then jump to process 3.
